# EUROPEAN PATENT SPECIFICATION

(11) **EP 2 259 935 B1**
(45) Date of publication and mention of the grant of the patent: **22.01.2014**
(21) Application number: 08719433.8
(22) Date of filing: 07.04.2008
(51) Int. Cl.: B60G 7/00, B60G 9/00, F16C 11/06, F16C 27/06

(54) **REACTION ROD ARRANGEMENT**
REAKTIONSSTANGENANORDUNG
DISPOSITIF DE JAMBE DE RÉACTION

(43) Date of publication of application: 15.12.2010
(73) Proprietor: Kongsberg Automotive AS, 3601 Kongsberg (NO)
(72) Inventor: BJOERKGARD, Sven, N-3610 Kongsberg (NO); ANDERSEN, Dagfinn, N-3628 Veggli (NO)
(74) Representative: UEXKÜLL & STOLBERG
(86) International application number: PCT/IB2008/000847
(87) International publication number: WO 2009/125238

(56) References cited:
- EP-A1- 0 147 662
- EP-A1- 0 487 458
- EP-A1- 0 597 614
- EP-A2- 0 698 743
- EP-A2- 1 132 642
- EP-A2- 1 772 357
- WO-A1-00/51833
- WO-A1-00/51833
- WO-A1-03/076218
- WO-A1-2004/055406
- WO-A1-2006/057585
- WO-A1-2009/124120
- DE-A1- 3 613 123
- DE-A1- 4 316 213
- DE-A1- 10 204 975
- DE-A1- 10 362 009
- DE-C1- 3 843 820
- GB-A- 1 020 799
- GB-A- 1 020 799
- GB-A- 2 343 709
- GB-A- 2 417 054
- JP-A- 4 349 012
- US-A- 4 007 924
- US-A- 5 033 722
- US-A1- 2004 012 167

## Description

The present invention refers to a reaction rod arrangement, in particular a V-stay suspension, for a vehicle including a bushing, wherein the bushing comprises a rigid core member having a bearing portion and defining a longitudinal axis, and an elastomer body being arranged on at least a portion of the radially outer surface of the bearing portion.

A reaction rod arrangement such as a V-stay suspension may be used in vehicles for the connection between the vehicle frame and the axle for wheel suspension. Especially heavy vehicles such as trucks may comprise a V-stay which is connected with two end-points to the chassis and one central suspension point to the axle for wheel suspension. Such a system is for example described in WO 2005/080101 A1.

The V-stay suspension described in WO 2005/080101 A1 comprises a bushing for force absorption. The suspension is exposed to movements in both rotational and tilting directions, such that the V-stay requires to be flexibly deflectable into rotational and tilting directions in order to absorb relative movements and forces between the chassis and the axle for wheel suspension. On the other hand, the V-stay needs to be stiff in other directions to provide stability. To comply with these requirements the suspension bushing described in WO 2005/080101 A1 comprises a specific design of an inclined ball joint.

Another solution for a suspension bushing is presented in EP 0 226 702 A1. The bushing described therein comprises one or two elastomer bodies and three metallic bodies. A first elastomer body is arranged between an inner and a middle metallic body while the second elastomer body is vulcanised on the middle and an outer metallic body. The bushing defines a horizontal longitudinal axis such that the vertical load force on the bushing is directed perpendicular to the longitudinal axis. With reference to the longitudinal axis the bushing should be stiff in the radial direction to provide high stability. On the other hand, it should be elastic in a tilting direction, i.e. about a polar angle relative to the longitudinal axis of the bushing, in order to absorb movements in these directions. For the V-stay to perform pivotal movements to allow bumping movements of the chassis it is further necessary that the bushing allows a rotation about the longitudinal axis of the bushing.

The EP 0 226 702 A1 describes a bushing which comprises a middle metallic body having a spherical outer surface, and an inner elastomer body between an inner metallic body and the middle metallic body, wherein the inner elastomer body is rotatable with respect to the inner metallic body or the middle metallic body by means of recesses for lubricant in the surface which has contact with the inner and middle metallic body, respectively. The other contact surfaces of the elastomer body are fixed positively to the metallic bodies by vulcanisation.

This solution has the disadvantage that the bushing is costly and too stiff in tilting directions. The reason for this is that radial stiffness is provided by a relatively thin inner elastomer body which is able to rotate about the longitudinal axis only. The elasticity in the tilting directions is provided by the more voluminous outer elastomer body which is fixed to the metallic bodies by vulcanisation. Therefore, the flexibility in the tilting directions is limited by the shear strength of the outer elastomer body. The stress on the elastomer body poses a high risk of wear and abrasion.

Another problem is that there is a high risk of a displacement of the elastomer with respect to the inner metallic body along the longitudinal axis. In order to maintain flexibility in the tilting directions the axial ends of the bushing can not be secured by a tight flange fitting. With regard to the large forces applied the suggested axial fixation, by means of recesses and projections between the elastomer body and the inner metallic body, does not safely secure the bushing in the axial direction.

WO 00/51833 describes a reaction rod arrangement comprising a bushing with a rigid core member defining a longitudinal axis with a bearing portion that has an at least partially oval, non-spherical shape. An elastomer body is arranged on the radially outer surface of the bearing portion and able to perform a rotational movement about the longitudinal axis relative to the rigid core member.

GB 2 417 054 A discloses a bushing having a bore that can receive an axle or a shaft. The bushing has a bearing portion that comprises a first and a second tapering portion that taper towards different axial ends of the bearing portion. The axial extension of the bearing portion is also larger than its maximal radial extension. An elastomer body is movably arranged on the radially outer surface of the bushing and can perform rotational movements about the longitudinal axis and tilting movements about an axis perpendicular to the longitudinal axis.

EP 1 772 357 A2 discloses a bushing with an elastomer body comprising two separate parts which are mounted on a rigid core member. A rigid body is arranged between parts of the elastomer body.

EP 0 698 743 A2 discloses a bushing with an elastomer body. The elastomer body can be rotated about a rigid core member and also tilted. The elastomer body is arranged on a metal sleeve which is located between the elastomer body and the rigid core member.

GB 1,020,799 discloses a bushing comprising a rigid core member having a bearing portion and defining a longitudinal axis. The bearing portion comprises a first and a second tapering portion, its axial extension is larger than its maximal radial extensions with respect to the axis and an elastomer body is arranged on its radially outer surface. The elastomer body may rotate relative to the rigid core member about the longitudinal axis and an axis perpendicular to the longitudinal axis.

DE 36 13 123 A discloses a bearing with a void in an elastomer body. The elastomer body can also rotate about the longitudinal axis of a rigid core member. A tilting movement of the elastomer body with respect to the rigid core member is not possible.

The present invention is based on DE 38 43 820 Cl which discloses a reaction rod arrangement, in particular a V-stay suspension, for a vehicle including a bushing. The bushing comprises a rigid core member with an outer surface forming a bearing having a first and a second tapering portion. The axial extension of the oval, non-spherical bushing along the longitudinal axis of the bushing portion is larger than its maximal radial extension. On the radial outer surface of the bearing an elastomer body is arranged. The elastomer body further comprises a rigid body moulded into the elastomer.

It is therefore the object of the present invention to provide a simpler and more inexpensive reaction rod arrangement including a bushing such that the suspension is stiff and secured in the radial and axial directions and flexible in the tilting directions.

This object is solved by the subject-matter of claim 1. Preferred embodiments of the invention are subject of the dependent claims 2 to 8.

According to the present invention a reaction rod arrangement, in particular a V-stay suspension, for a vehicle including a bushing is provided, wherein the bushing comprises a rigid core member having a bearing portion and defining a longitudinal axis, and an elastomer body being arranged on at least a portion of the radially outer surface of the bearing portion of the rigid core member, characterised in that the bearing portion comprises a first and a second tapering portion, wherein the first tapering portion tapers towards one axial end of the bearing portion and the second tapering portion tapers towards the other opposite axial end of the bearing portion, wherein the axial extension of the bearing portion is larger than its radial extension, and wherein the elastomer body is movably arranged on the bearing portion such that the elastomer body is able to perform a rotational movement about the longitudinal axis relative to the rigid core member and able to perform a tilting movement about an axis perpendicular to the longitudinal axis relative to the rigid core member.

The rigid core member typically comprises three portions along the longitudinal axis. Two axially outer mounting portions each adapted to be attached to a vehicle part and an axially central bearing portion which is constructed essentially rotational-symmetric about the longitudinal axis. Herein, "axial" means along the longitudinal axis of the rigid core member. Contrary, "radial" refers to a direction perpendicular to the longitudinal axis of the rigid core member. Further, the term "tapering" means herein any way of reducing in radial extension along an axial path. "Tapering" or "taper" is therefore not restricted to a conical shape which reduces linearly in radial extension along the axial direction but includes any non-linear reduction of radial extension complying with the requirement that the axial extension of the bearing portion is larger than its maximal radial extension with respect to the longitudinal axis. A tilting movement about an axis perpendicular to the longitudinal axis relative to the rigid core member represents a rotation into a tilting direction.

A rigid body is moulded into the elastomer body and the elastomer body comprises voids. A first portion of the elastomer body is located radially inward from the rigid body and is less voluminous than a second portion of the elastomer body located radially outward from the rigid body. A void in the elastomer body is located radially outward from the rigid body.

Preferably, the bearing portion of the rigid core member has at least partially an oval, non-spherical shape. The length of the bearing portion represents its axial extension along the longitudinal axis. The width of the bearing portion is defined by its maximal radial extension with respect to the longitudinal axis. The fact that the length of the bearing portion is larger than the width of the bearing portion ensures that the shape of the bearing portion is non-spherical. This has the advantage that a central neutral position is defined with respect to a tilting direction. A tilt in a tilting direction leads to a slight return force induced by a local compression of the elastomer body pressing the bushing back to a central neutral position. If the bushing would remain in a tilted position, as it would be the case for a ball-joint configuration known for instance from WO 2005/080101 A1, there is a risk that parts of the V-stay accidentally contact other parts of the vehicle. Especially when the bushing is unstressed during manufacturing, assembling, maintenance, inspection or repair of the vehicle it is advantageous that the bushing takes a central neutral position all by itself. Therefore, it is preferred that said portion of the radially outer surface of the bearing portion of the rigid core member comprises at least one return portion arranged to press the elastomer body back to a neutral position relative to the rigid core when the elastomer body is tilted about an axis perpendicular to the longitudinal axis relative to the rigid core member.

It is an important feature of the invention that the elastomer body is movable relative to the bearing portion in a tilting direction, i.e. about an axis perpendicular to the longitudinal axis by a polar angle relative to the rigid core member. This mobility is in addition to a rotational mobility around the longitudinal axis relative to the rigid core member. It should, however, be noted that the elastomer body is tightly fitted to the bearing portion in such a way that in case of forces in a tilting direction the elastomer body first deforms locally before it starts sliding relative to the bearing portion in a tilting direction. This is due to the frictional force between the elastomer body and the bearing portion. In a bearing portion of spherical shape as it is for instance present in a ball joint configuration, a force acting on the elastomer body in a tilting direction is directed tangentially with respect to the contact surface, i.e. parallel to the frictional resistance without a radial vector component causing local deformations of the elastomer body. In contrast to that, the tapering or oval shape of the bearing portion of the inventive bushing results in a stronger frictional contact between the elastomer body and the bearing portion. A force acting on the elastomer body in a tilting direction is directed with an angle to the return surface of the bearing portion, i.e. a radial vector component causes local deformations of the elastomer body which increases the normal force between elastomer body and the bearing portion. Only when the tangential component of a force acting on the elastomer body in a tilting direction is large enough to overcome the frictional resistance between the elastomer body and the bearing portion the elastomer body starts to slide in a tilting direction relative to the bearing portion. Therefore, the elastomer body of the inventive bearing does not slide in case of small tilting forces. Small tilting movements are absorbed by local deformations of the elastomer body. If the forces exceed a certain threshold the elastomer body starts sliding relative to the bearing portion in a tilting direction.

Due to the tapering shape of the bearing portion an axial displacement of the elastomer body is prevented, whereas a tilt in a tilting direction is allowed. Compared to the solution known from EP 0 226 702 A1 the return force into a central neutral position is not induced by the axial sheer resistance of the elastomer body but by local compression of portions of the elastomer body. Therefore, the flexibility in a tilting direction is higher in the inventive solution and the risk of wear and abrasion is reduced. However, a slight return force into a central neutral position remains on purpose.

In a preferred embodiment of the inventive bushing the elastomer body comprises two separate parts which are mounted on the rigid core. The parts of the elastomer body may be pressed towards the rigid core by surrounding material the bushing is pressed into. Preferably, the parts of the elastomer body are halves with interface portions each, wherein the respective interface portions of the halves are in contact with each other when the bushing is mounted.

This embodiment has the advantage that there is no complicated fixation by vulcanisation needed to provide a safely secured elastic suspension. The production and mounting costs are comparatively low. In addition, the interface portion of at least one halve may comprise plastically deformable studs to provide tolerance with limited effect on the press fit. The studs will be plastically deformed during assembly dependent on the press force the halves are exposed to.

It may be advantageous that the elastomer body comprises voids in order to increase the flexibility of the elastomer body for local compressions. Furthermore, it may be preferred that a rigid body is moulded into the elastomer body in order to increase radial and axial stiffness. The radially inner surface of the rigid body may be formed essentially the same way in which said portion of the radially outer surface of the bearing portion is formed. The rigid body increases the inner stability of the bushing and secures the elastomer body to the bearing portion of the rigid core member in radial and axial direction. In order to further maximise radial and axial stiffness it is advantageous if a first portion of the elastomer body is located radially inward from the rigid body and is less voluminous than a second portion of the elastomer body located radially outward from the rigid body. The radially inner first portion is therefore less compressible than the radially outer second portion. The compression of the elastomer body due to a tilt in a tilting direction may therefore be essentially performed in the radially outer second portion. In case the elastomer body comprises voids, these should be located radially outward from the rigid body.

In the following the present invention is discussed in further detail with reference to the accompanying figures 1 to 5 displaying a preferred embodiment of the invention.
Fig. 1 shows a perspective view of a preferred embodiment of the inventive bushing before it is pressed into a receptacle part of the vehicle.
Fig. 2 shows a perspective view of one half of an elastomer body of a preferred embodiment of the inventive bushing.
Fig. 3 illustrates a perspective view of a rigid core member of a preferred embodiment of the inventive bushing.
Fig. 4 shows a cross-sectional view of a preferred embodiment of the inventive bushing.
Fig. 5 shows a perspective view of a decoupled V-stay assembly using bushings according to a preferred embodiment of the invention for suspension.

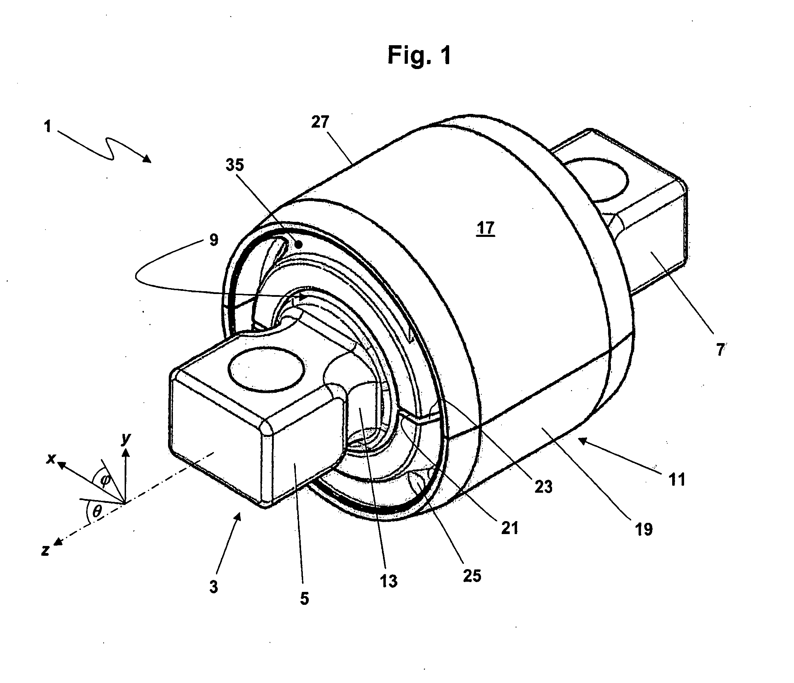

The perspective view of figure 1 shows a preferred embodiment of the inventive bushing 1. A central rigid core member 3 defines a longitudinal axis z. The rigid core member 3 comprises basically three main portions along the longitudinal axis z. Two axially outer mounting portions 5, 7 each adapted to be attached to a vehicle part and an axially central bearing portion 9 which is surrounded by an elastomer body 11 and therefore basically hidden in figure 1.

To clarify the different directions of motion it is useful to define a coordinate system as shown in figure 1. Starting from a cartesian coordinate system with a *z-axis* corresponding to the longitudinal axis of the rigid core member 3 and a cross-sectional plane spanned by the perpendicular axes *x* and *y,* spherical coordinates may be defined, e.g. the azimuthal angle *φ* and the polar angle *θ*. The azimuthal angle *φ* represents a rotation about the longitudinal axis z, whereas a tilt in the tilting direction is represented by a rotation about an axis perpendicular to the z-axis by the polar angle *θ*. As the symmetry of the bushing 1 is rather cylindrical than spherical it is useful to define the radial extension with respect to the z-axis rather than to a point of origin. The point of origin, however, may be defined as the axially central point of the rigid core member 3 on the longitudinal z-axis.

The two axially outer mounting portions 5, 7 of the rigid core member 3 comprise a bore for attachment to a vehicle part (not shown). Between the mounting portions 5, 7 and the bearing portion 9 there are intermediate portions 13, 15 of less radial extension. This is important to allow for the elastomer body 11 to tilt into a tilting direction relative to the rigid core member 3 by rotating slidingly on the bearing portion 9 about the polar angle *θ*.

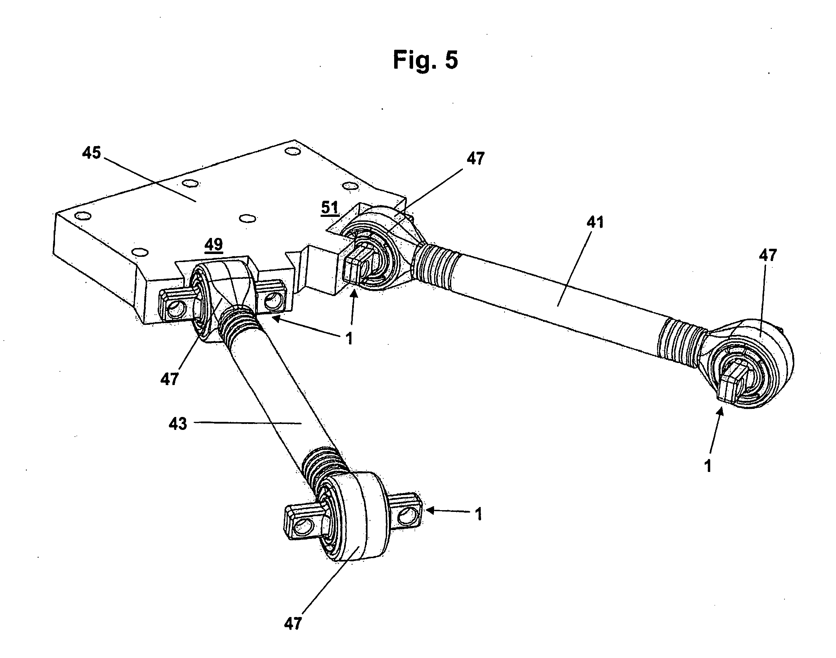

The elastomer body 9 of the preferred embodiment of the inventive bushing shown in figure 1 comprises two separate parts in form of halves 17, 19 which are mounted on the bearing portion 9. The halves 17, 19 of the elastomer body 11 are tightly pressed radially inward towards the bearing portion 9. For the sake of visibility the surrounding material the bushing is pressed into is not shown. The bushing 1 may for instance be pressed into a lug of a rod that is part of a V-stay (see figure 5). The halves 17, 19 of the elastomer body have interface portions 21, 23 each, which are mutually in contact. In addition, the interface portion of at least one halve 17, 19 may comprise plastically deformable studs (not shown) to provide tolerance with limited effect on the press fit. The studs will be plastically deformed during assembly dependent on the press force the halves 17, 19 are exposed to.

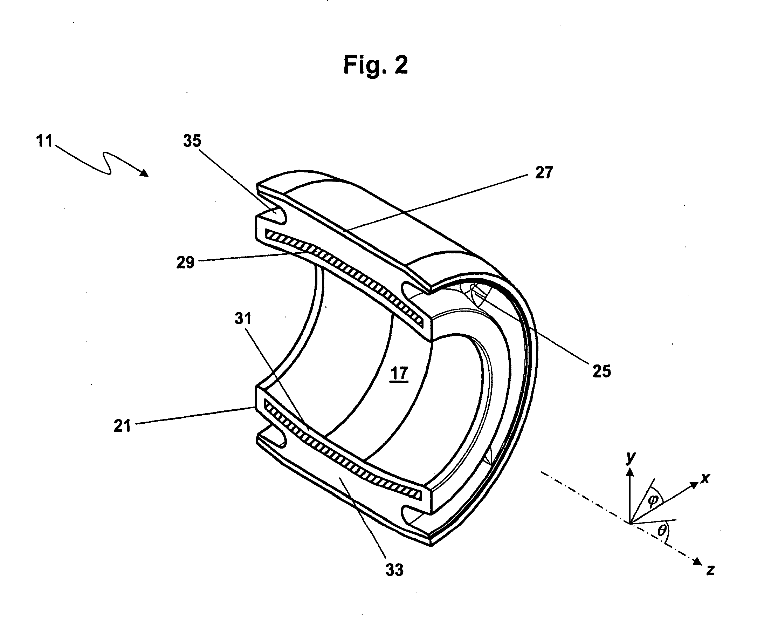

The elastomer body 11 also comprises voids 25 in order to increase the flexibility of the elastomer body 11 for local compressions. Figure 2 gives a better perspective view on one half 17 of the elastomer body 11 of a preferred embodiment of the inventive bushing 1. The half 17 of the elastomer body 11 is surrounded by an outer rigid sleeve 27 stabilising the essentially half-tubular shape of the half 17 of the elastomer body 11. There is a rigid body 29 moulded into the elastomer body 11. This rigid body 29 provides radial and axial stiffness for the elastomer body 11 as it extends almost over the full length of the elastomer body 11. The rigid body 29 inside the elastomer body 11 may therefore be used to define a first portion 31 of the elastomer body 11 which is located radially inward from the rigid body 29 and a second portion 33 of the elastomer body 11 located radially outward from the rigid body 29. The radially inward first portion 31 is less voluminous than the second portion 33 to provide axial and radial stiffness. The second portion 33 is radially thicker that the first portion 31 but axially thinner due to axially inward concave indentations 35 at both axial ends in order to provide sufficient compressibility for rotation in a tilting direction. In addition to that the radially outer second portion 33 comprises voids in form of axial bores through the second portion 33 to further increase the compressibility.

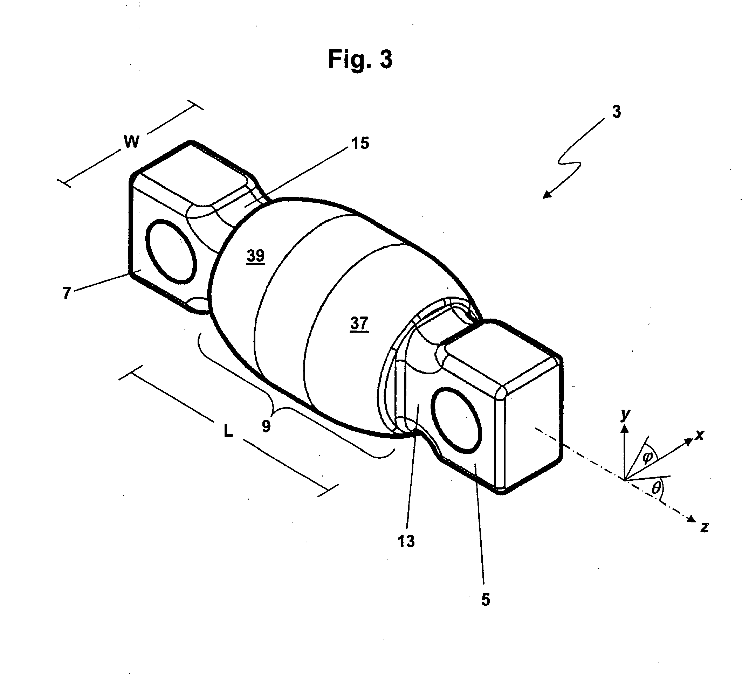

Figure 3 illustrates a perspective view of a rigid core member 3 of a preferred embodiment of the inventive bushing 1. Especially, the axially central oval-shaped bearing portion 9 of the rigid core member 3 is visible. The bearing portion 9 comprises two tapering portions 37, 39 each tapering towards the axial ends of the bearing portion 9. The tapering is not linear but follows an oval shape such that a minimal radial extension of the bearing portion 9 is reached at the axial ends of it. Axially further outward the rigid core member 3 extends via two intermediate portions 13, 15 to mounting portions 5, 7. The intermediate portions 13, 15 have a smaller radial extension than the minimal radial extension of the bearing portion 9 in order to allow sufficient play for movement of the elastomer body 11 into a tilting direction. It is important to note that the shape of the bearing portion 9 is not spherical but essentially oval. The axial extension of the bearing portion, i.e. its length, is larger than its maximal radial extension with respect to the longitudinal axis, i.e. its width. This ensures a central neutral position of the bearing with respect to a tilt into a tilting direction. Depending on the tilt direction one or more portions of the radially outer surface of the bearing portion 9 which are in contact with the elastomer body 11 act as return portions pressing the elastomer body 11 back to the central neutral position when the elastomer body 11 is tilted about a polar angle *θ* relative to the rigid core member. This pressing force results in a local compression of the elastomer body 11 such that a return force inducing a turning moment towards the central neutral position is induced. Due to the large forces a V-stay is exposed to during operation of the vehicle this return force does not significantly limit the flexibility for the movement into a tilting direction. On the other hand, when the V-stay and therefore the bushing 1 is essentially unstressed during manufacturing, assembling, maintenance, inspection or repair of the vehicle for instance by jacking up the vehicle it is advantageous that the bushing 1 takes a central neutral position all by itself.

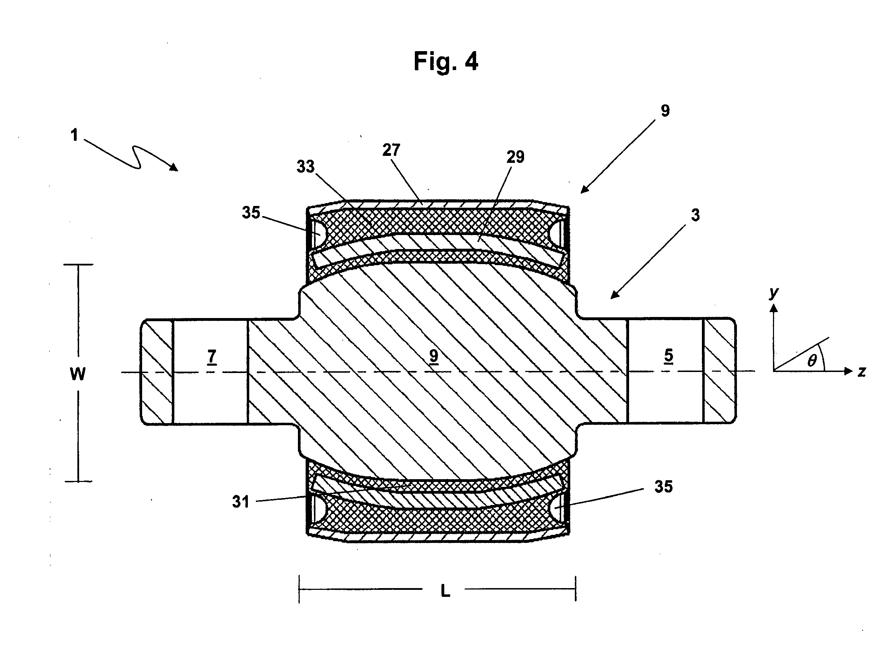

The cross-sectional view of a preferred embodiment of the inventive bushing 1 shown in figure 4 gives a better impression of rigid and elastic material in the bushing 1. The elastomer body 11 is mounted on the essentially oval-shaped bearing portion 9 of the rigid core member 3. Those portions displayed chequered are of flexible, elastic and compressible elastomer material. Hatched portions in figure 4 display rigid material, preferably a stiff metal or an inelastic polymer. The shape of the radially inner surface of the rigid body 29 moulded into the elastomer body 11 is formed essentially the same way in which the radially outer surface of the bearing portion is formed.

From Figure 4 the easy and inexpensive way for manufacturing the bushing 1 may be appreciated. Before assembling the elastomer body 11 on the bearing portion 9 the elastomer body 11 together with the inner rigid body 3 and the radially outer sleeve 27 may have a tubular shape with a constant inner radius over its length. Therefore, the elastomer body 11 may be imposed on the bearing portion 9. When the elastomer body 11 is located at the axially central position, press-jaws of an assembly unit (not shown) may engage with the axially inward concave indentations 35 at both axial ends of the elastomer body 11. These press-jaws may press-fit the inner rigid body 29 radially inwards towards the bearing portion 9 such that the radially inner surface of the rigid body 29 takes the form of the radially outer surface of the bearing portion 3. Thereby, the radially inner surface of the elastomer body 11 is formed to be in sliding contact with the radially outward surface of the bearing portion 9 over the full length. The press-fitting ensures a radial and axial stiffness such that an overall axial displacement of the elastomer body 11 is prevented but a tilt in the tilting direction is allowed.

Fig. 5 shows a perspective view of a decoupled V-stay assembly using four bushings according to a preferred embodiment of the invention for suspension. Two reaction rods 41, 43 are each attached independently in a V-configuration to a common assembly plate 45 via a bushing 1. The reaction rods 41, 43 comprise lugs 47 at one end into which bushings 1 are pressed. The assembly plate 45 comprises yoke portions 49, 51 to which the mounting portions 5, 7 of the rigid core member 3 of the bushings 1 are attached. The free ends of the reaction rods 41, 43 also comprise lugs 53 into which bushings 1 are pressed. The mounting portions 5, 7 of the rigid core member 3 of these bushings 1 may be attached to other parts of the vehicle.

## Claims

1. A reaction rod arrangement, in particular a V-stay suspension, for a vehicle including a bushing (1), wherein the bushing (1) comprises
a rigid core member (3) having a bearing portion (9) and defining a longitudinal axis (z), and
an elastomer body (11) being arranged on at least a portion of the radially outer surface of the bearing portion (9),
wherein the bearing portion (9) comprises a first and a second tapering portion (37, 39), wherein the first tapering portion (37) tapers towards one axial end of the bearing portion (9) and the second tapering portion (39) tapers towards the other opposite axial end of the bearing portion (9),
wherein the axial extension of the bearing portion (9) is larger than its maximal radial extension with respect to the longitudinal axis (z),
wherein the elastomer body (11) is movably arranged on the bearing portion (9) such that the elastomer body (11) is able to perform a rotational movement about the longitudinal axis (z) relative to the rigid core member (3) and a tilting movement about an axis perpendicular to the longitudinal axis (z) relative to the rigid core member (3) and
wherein a rigid body (29) is moulded into the elastomer body (11),
**characterized in**
**that** a first portion (31) of the elastomer body (11) is located radially inward from the rigid body (29) and is less voluminous than a second portion (33) of the elastomer body (11) located radially outward from the rigid body (29) and
**that** the elastomer body (11) comprises voids (25), wherein a void (25) in the elastomer body (11) is located radially outward from the rigid body (29).

2. A reaction rod arrangement according to claim 1, wherein the bearing portion (9) has at least partially an oval, non-spherical shape.

3. A reaction rod arrangement according to claim 1 or 2, wherein said portion of the radially outer surface of the bearing portion (9) comprises at least one return portion arranged to press the elastomer body (11) back to a neutral position relative to the rigid core member (3) when the elastomer body (11) is tilted about an axis perpendicular to the longitudinal axis (z) relative to the rigid core member (3).

4. A reaction rod arrangement according to any one of the preceding claims, wherein the elastomer body (11) comprises two separate parts (17, 19) which are mounted on the rigid core member (3).

5. A reaction rod arrangement according to claim 4, wherein the parts (17, 19) of the elastomer body (11) are pressed towards the rigid core member (3) by surrounding material the bushing (1) is pressed into.

6. A reaction rod arrangement according to claim 4 or 5, wherein the parts (17, 19) of the elastomer body (11) are halves (17, 19) with interface portions (21, 23) each, wherein the respective interface portions (21, 23) of the halves (17, 19) are in contact with each other when the bushing (1) is mounted.

7. A reaction rod arrangement according to claim 6, wherein the interface portion (21, 23) of at least one halve (17, 19) comprises plastically deformable studs.

8. A reaction rod arrangement according to any of the previous claims, wherein the radially inner surface of the rigid body (29) is formed essentially the same way in which said portion of the radially outer surface of the bearing portion (9) is formed.

## Patentansprüche

1. Schräglenkeraufbau, insbesondere eine Dreieckslenker-Aufhängung, für ein Fahrzeug, mit einer Buchse (1), wobei die Buchse (1) aufweist
ein starres Kernteil (3), das einen Lagerbereich (9) hat und eine Längsachse (z) definiert, und
einen Elastomerkörper (11), der wenigstens auf einem Teil der radial äußeren Oberfläche des Lagerbereiches (9) angeordnet ist,
wobei der Lagerbereich (9) einen ersten und zweiten sich verjüngenden Bereich (37, 39) hat, wobei der erste sich verjüngende Bereich (37) sich zu einem axialen Ende des Lagerbereichs (9) hin verjüngt und der zweite sich verjüngende Bereich (39) sich zu dem anderen, gegenüberliegenden axialen Ende des Lagerbereiches (9) hin verjüngt,
wobei die axiale Ausdehnung des Lagerbereiches (9) größer als seine maximale radiale Ausdehnung in Bezug auf die Längsachse (z) ist,
wobei der Elastomerkörper (11) beweglich auf dem Lagerbereich (9) angeordnet ist, so dass der Elastomerkörper (11) dazu in der Lage ist, eine Drehbewegung um die Längsachse (Z) in Bezug auf das starre Kernteil (3) und eine Kippbewegung um eine Achse senkrecht zur Längsachse (z) in Bezug auf das starre Kernteil (3) auszuführen, und
wobei ein starrer Körper (29) in den Elastomerkörper (11) eingegossen ist,
**dadurch gekennzeichnet, dass**
ein erster Bereich (31) des Elstomerkörpers (11) radial innerhalb des starren Körpers (29) liegt und weniger Volumen hat als ein zweiter Bereich (33) des Elastomerkörpers (11), der radial außerhalb des starren Körpers (29) liegt, und
dass der Elastomerkörper (11) Hohlräume (25) aufweist, wobei ein Hohlraum (25) in dem Elastomerkörper (11) radial außerhalb von dem starren Körper (29) angeordnet ist.

2. Schräglenkeraufbau nach Anspruch 1, wobei der Lagerbereich (9) wenigstens teilweise eine ovale, nicht-sphärische Form hat.

3. Schräglenkeraufbau nach Anspruch 1 oder 2, wobei der Bereich der radial äußeren Oberfläche des Lagerbereiches (9) wenigstens einen Rückkehrbereich aufweist, der dazu angepasst ist, um den Elastomerkörper (11) zurück in eine neutrale Position relativ zu dem starren Kernteil (3) zu drücken, wenn der Elastomerkörper (11) um eine Achse senkrecht zu der Längsachse (z) relativ zu dem starren Kernteil (3) gekippt ist.

4. Schräglenkeraufbau nach einem der vorhergehenden Ansprüche, wobei der Elastomerkörper (11) zwei separate Teile (17, 19) aufweist, die an dem starren Kernteil (3) angebracht sind.

5. Schräglenkeraufbau nach Anspruch 4, wobei die Teile (17, 19) des Elastomerkörpers (11) durch umgebendes Material, in das die Buchse (1) hineingedrückt ist, zu dem starren Kernteil (3) hin gedrückt werden.

6. Schräglenkeraufbau nach Anspruch 4 oder 5, wobei die Teile (17, 19) des Elastomerkörpers (11) Hälften (17, 19) jeweils mit Schnittstellenbereichen (21, 23) sind, wobei die jeweiligen Schnittstellenbereiche (21, 23) der Hälften (17, 19) miteinander in Kontakt sind, wenn die Buchse (1) angebracht ist.

7. Schräglenkeraufbau nach Anspruch 6, wobei der Schnittstellenbereich (21, 23) wenigstens einer Hälfte (17, 19) plastisch verformbare Bolzen aufweist.

8. Schräglenkeraufbau nach einem der vorhergehenden Ansprüche, wobei die radial innere Oberfläche des starren Körpers (29) in im Wesentlichen dergleichen Weise geformt ist, in der der Bereich der radial äußeren Oberfläche des Lagerbereichs (9) geformt ist.

## Revendications

1. Agencement de barres de réaction, en particulier suspension à tirants V, destiné à un véhicule, comprenant une bague (1), dans lequel la bague (1) comprend
un élément central rigide (3) comportant une partie palier (9) et définissant un axe longitudinal (z), et
un corps en élastomère (11) agencé sur au moins une partie de la surface radialement extérieure de la partie palier (9),
dans lequel la partie palier (9) comprend une première et une seconde partie à diamètre décroissant (37, 39), la première partie à diamètre décroissant (37) allant en diminuant en direction d'une extrémité axiale de la partie palier (9) et la seconde partie à diamètre décroissant (39) allant en diminuant en direction de l'autre extrémité axiale opposée de la partie palier (9),
dans lequel l'étendue axiale de la partie palier (9) est supérieure à son étendue radiale maximale par rapport à l'axe longitudinal (z),
dans lequel le corps en élastomère (11) est disposé mobile sur la partie palier (9) de sorte que le corps en élastomère (11) peut effectuer un mouvement de rotation autour de l'axe longitudinal (z) par rapport à l'élément central rigide (3) et un mouvement d'inclinaison autour d'un axe perpendiculaire à l'axe longitudinal (z) par rapport à l'élément central rigide (3), et
dans lequel un corps rigide (29) est moulé dans le corps en élastomère (11),
**caractérisé**
**en ce qu'**une première partie (31) du corps en élastomère (11) est située radialement à l'intérieur du corps rigide (29) et est moins volumineuse qu'une seconde partie (33) du corps en élastomère (11) située radialement à l'extérieur du corps rigide (29), et
**en ce que** le corps en élastomère (11) comprend des vides (25), dans lequel un vide (25) du corps en élastomère (11) est situé radialement à l'extérieur du corps rigide (29).

2. Agencement de barres de réaction selon la revendication 1, dans lequel la partie palier (9) a au moins une forme non sphérique partiellement ovale.

3. Agencement de barres de réaction selon la revendication 1 ou 2, dans lequel ladite partie de la surface radialement extérieure de la partie palier (9) comprend au moins une partie de renvoi disposée de façon à ramener, par pression, le corps en élastomère (11) vers une position neutre par rapport à l'élément central rigide (3) lorsque que le corps en élastomère (11) est incliné autour d'un axe perpendiculaire à l'axe longitudinal (z) par rapport à l'élément central rigide (3).

4. Agencement de barres de réaction selon l'une quelconque des revendications précédentes, dans lequel le corps en élastomère (11) comprend deux parties distinctes (17, 19) qui sont montées sur l'élément central rigide (3).

5. Agencement de barres de réaction selon la revendication 4, dans lequel les parties (17, 19) du corps en élastomère (11) sont pressées vers l'élément central rigide (3) par un matériau environnant dans lequel la bague (1) est comprimée.

6. Agencement de barres de réaction selon la revendication 4 ou 5, dans lequel les parties (17, 19) du corps en élastomère (11) sont des demi-parties (17, 19) dotées chacune de parties d'interface (21, 23), dans lequel les parties d'interface respectives (21, 23) des demi-parties (17, 19) sont en contact l'une avec l'autre lorsque la bague (1) est montée.

7. Agencement de barres de réaction selon la revendication 6, dans lequel la partie d'interface (21, 23) d'au moins une demi-partie (17, 19) comprend des pointes plastiquement déformables.

8. Agencement de barres de réaction selon l'une quelconque des revendications précédentes, dans lequel la surface radialement intérieure du corps rigide (29) est formée sensiblement de la même manière que ladite partie de la surface radialement extérieure de la partie palier (9).
